# EUROPEAN PATENT SPECIFICATION

(11) **EP 3 521 022 B1**
(45) Date of publication and mention of the grant of the patent: **05.04.2023**
(21) Application number: 17856435.7
(22) Date of filing: 29.09.2017
(51) Int. Cl.: B29C 45/14, B29C 64/223, B33Y 10/00, B33Y 40/00, B29K 33/04

(54) **TRANSFER FILM FOR THREE-DIMENSIONAL MOLDING, MANUFACTURING METHOD THEREFOR, AND METHOD FOR MANUFACTURING RESIN MOLDED ARTICLE**
TRANSFERFOLIE ZUR DREIDIMENSIONALEN FORMUNG, HERSTELLUNGSVERFAHREN DAFÜR UND VERFAHREN ZUR HERSTELLUNG EINES HARZFORMARTIKELS
FILM DE TRANSFERT POUR MOULAGE TRIDIMENSIONNEL, SON PROCÉDÉ DE FABRICATION, AINSI QUE PROCÉDÉ DE FABRICATION DE PRODUIT MOULÉ EN RÉSINE

(30) Priority: 30.09.2016 JP 2016195075
(43) Date of publication of application: 07.08.2019
(73) Proprietor: Dainippon Printing Co., Ltd., Shinjuku-ku Tokyo 162-8001 (JP)
(72) Inventor: YOKOYAMA, Daisuke, Tokyo 162-8001 (JP); NODA, Akihisa, Tokyo 162-8001 (JP); NAKATSUGAWA, Yuji, Tokyo 162-8001 (JP); HASHIMOTO, Shunichi, Tokyo 162-8001 (JP); SUSUKIDA, Makoto, Tokyo 162-8001 (JP)
(74) Representative: Beck Greener LLP
(86) International application number: PCT/JP2017/035482
(87) International publication number: WO 2018/062486

(56) References cited:
- JP-A- 2012 056 236
- JP-A- 2013 111 929
- JP-A- 2014 069 520
- JP-A- 2014 195 999
- JP-A- 2015 193 248

## Description

### TECHNICAL FIELD

The present invention relates to a transfer film for three-dimensional molding, a method for producing the transfer film, and a method for producing a resin molded article.

### BACKGROUND ART

For resin molded articles to be used in automobile interiors and exteriors, building interior materials, household electric appliances and so on, and resin molded articles to be used in organic glass that is used as an alternative material for inorganic glass, etc., techniques for laminating a surface protective layer using a three-dimensional molding film for the purpose of surface protection and impartment of design property are used. Three-dimensional molding films to be used in these techniques can be classified broadly into lamination-type three-dimensional molding films and transfer-type three-dimensional molding films. In the lamination-type three-dimensional molding film, a surface protective layer is laminated on a support base material so as to be situated on the outermost surface, and a molded resin is laminated on the support base material side, so that the support base material is incorporated in a resin molded article. On the other hand, in the transfer-type three-dimensional molding film, a surface protective layer is laminated on a support base material directly or with a release layer interposed therebetween, the release layer being provided as necessary, and a molded resin is laminated on a side opposite to the support base material, followed by separating the support base material, so that the support base material does not remain in a resin molded article. These two types of three-dimensional molding films are used properly according to the shapes of resin molded articles and required functions.

For surface protective layers to be provided in these three-dimensional molding films, resin compositions containing an ionizing radiation curable resin which is chemically crosslinked and cured when irradiated with an ionization radiation, typically an ultraviolet ray, an electron beam or the like are used for imparting excellent surface properties to resin molded articles. The three-dimensional molding films are classified broadly into those in which the surface protective layer is already cured by an ionizing radiation in the state of a three-dimensional molding film, and those in which the surface protective layer is cured after the three-dimensional molding film is formed into a resin molded article by molding processing, and the former three-dimensional molding films are considered to be preferable for improving productivity by simplifying processes after molding processing. However, when the surface protective layer is cured in the state of a three-dimensional molding film, the flexibility of the three-dimensional molding film is reduced, so that the surface protective layer may be cracked in the process of molding processing, and therefore it is necessary to select a resin composition excellent in moldability. Particularly, the above-mentioned transfer-type three-dimensional molding film has the problem that it is more difficult to design a resin composition as compared to the lamination-type three-dimensional molding film because it is usually necessary to laminate other layers such as a design layer and an adhesive layer on the surface protective layer, the support base material must be separated from the surface protective layer in molding processing, a surface exposed by separating the support base material must exhibit excellent properties, and so on.

Under these conventional techniques, Patent Documents 1 and 2 disclose a technique for forming a surface protective layer using an ionizing radiation curable resin composition containing a polycarbonate (meth)acrylate. By using the resin composition, both three-dimensional moldability and scratch resistance can be secured even in a transfer-type three-dimensional molding film with a surface protective layer formed of a cured product of an ionizing radiation curable resin composition.

### PRIOR ART DOCUMENTS

### PATENT DOCUMENTS

Patent Document 1: Japanese Patent Laid-open Publication No. 2012-56236
Patent Document 2: Japanese Patent Laid-open Publication No. 2013-111929

### SUMMARY OF THE INVENTION

### PROBLEMS TO BE SOLVED BY THE INVENTION

However, in recent years, three-dimensional molding films to be used for production of resin molded articles have been required to have not only scratch resistance and moldability but also a function of giving resin molded articles contamination resistance with respect to various products that are used in the everyday life. Particularly, in recent years, skincare products such as sunscreen cosmetics, alcohol-containing chemicals, and the like have tended to be often used, and the frequency has increased at which the skin coated with such a skin care product comes into contact with a resin molded article, or an alcohol-containing chemical is deposited on a resin molded article. Thus, three-dimensional molding films have been strongly required to have further excellent chemical resistance to chemicals having high surface erodibility to resins.

In view of the above-mentioned circumstances, a main object of the present invention is to provide a three-dimensional molding film which has excellent moldability, and is capable of imparting excellent scratch resistance and chemical resistance to a resin molded article. Further, an object of the present invention is to provide a method for producing the three-dimensional molding film, and a method for producing a resin molded article using the three-dimensional molding film.

### MEANS FOR SOLVING THE PROBLEM

In order to achieve the above-mentioned object, the present inventors have extensively conducted studies. As a result, the present inventors have found that when in a transfer film for three-dimensional molding, which includes at least a surface protective layer on a transferring base material, the surface protective layer is formed of a cured product of an ionizing radiation curable resin composition containing a polycarbonate (meth)acrylate and an acrylic resin, wherein the acrylic resin is a homopolymer of a (meth)acrylic acid ester, a copolymer of two or more different (meth)acrylic acid ester monomers, or a copolymer of a (meth)acrylic acid ester and another monomer, and wherein a content of the acrylic resin contained in the ionizing radiation curable resin composition is 25 parts by mass or less based on 100 parts by mass of solid components other than the acrylic resin in the ionizing radiation curable resin composition, the transfer film for three-dimensional molding has excellent moldability, and is capable of imparting excellent scratch resistance and chemical resistance to a resin molded article. The present invention is an invention that has been completed by further conducting studies based on the above-mentioned findings.

That is, the present invention is defined by the subject-matter of independent claims 1, 7 and 8. Preferred embodiments are claimed in the dependent claims.

### ADVANTAGES OF THE INVENTION

According to the present invention, it is possible to provide a three-dimensional molding film which has excellent moldability, and is capable of imparting excellent scratch resistance and chemical resistance to a resin molded article. In addition, according to the present invention, it is possible to provide a method for producing the transfer film for three-dimensional molding, and a resin molded article obtained using the transfer film for three-dimensional molding.

### BRIEF DESCRIPTION OF THE DRAWINGS

Fig. 1 is a schematic view of a cross section structure of one form of a transfer film for three-dimensional molding according to the present invention.
Fig. 2 is a schematic view of a cross section structure of one form of a transfer film for three-dimensional molding according to the present invention.
Fig. 3 is a schematic view of a cross section structure of one form of a resin molded article with a support according to the present invention.
Fig. 4 is a schematic view of a cross section structure of one form of a resin molded article according to the present invention.

### EMBODIMENTS OF THE INVENTION

### 1. Transfer film for three-dimensional molding

A transfer film for three-dimensional molding according to the present invention includes at least a surface protective layer on a transferring base material, the surface protective layer being formed of a cured product of an ionizing radiation curable resin composition containing a polycarbonate (meth) acrylate and an acrylic resin, wherein the acrylic resin is a homopolymer of a (meth)acrylic acid ester, a copolymer of two or more different (meth)acrylic acid ester monomers, or a copolymer of a (meth)acrylic acid ester and another monomer, and wherein a content of the acrylic resin contained in the ionizing radiation curable resin composition is 25 parts by mass or less based on 100 parts by mass of solid components other than the acrylic resin in the ionizing radiation curable resin composition. The transfer film for three-dimensional molding according to the present invention, which has a configuration as described above, has excellent moldability, and is capable of imparting excellent scratch resistance and chemical resistance to the resin molded article. As described later, the transfer film for three-dimensional molding according to the present invention is not required to include a decorative layer etc., and may be, for example, transparent. Hereinafter, the transfer film for three-dimensional molding according to the present invention will be described in detail.

Regarding numerical ranges in this specification, a numerical range indicated by the term "A to B" means "A or more" and "B or less" unless the numerical range is specified by the term "or more" or "or less". For example, the expression of "2 to 15 mm" means 2 mm or more and 15 mm or less.

### Laminated structure of transfer film for three-dimensional molding

The transfer film for three-dimensional molding according to the present invention includes at least a surface protective layer on a transferring base material 1. On the surface protective layer 3 on a side opposite to the transferring base material 1, a primer layer 4 may be provided as necessary for the purpose of, for example, improving adhesion between the surface protective layer 3 and a layer adjacent thereto. In addition, a surface of the transferring base material 1 on the surface protective layer 3 side may be provided with a release layer 2 as necessary for the purpose of, for example, improving separability between the transferring base material 1 and the surface protective layer 3. In the transfer film for three-dimensional molding according to the present invention, the transferring base material 1 and the release layer 2 provided as necessary form a support 10, and the support 10 is separated and removed after the transfer film for three-dimensional molding is laminated to a molded resin layer 8.

The transfer film for three-dimensional molding according to the present invention may be provided with a decorative layer 5 as necessary for the purpose of, for example, imparting decorativeness to the transfer film for three-dimensional molding. The transfer film for three-dimensional molding may include an adhesive layer 6 as necessary for the purpose of, for example, improving the adhesion of the molded resin layer 8. A transparent resin layer 7 may be provided as necessary for the purpose of, for example, improving the adhesion between the surface protective layer 3 or the primer layer 4 and the adhesive layer 6. In the transfer film for three-dimensional molding according to the present invention, the surface protective layer 3, and the primer layer 4, decorative layer 5, adhesive layer 6, transparent resin layer 7 and so on which are additionally provided as necessary form a transfer layer 9, and the transfer layer 9 is transferred to the molded resin layer 8 to form a resin molded article according to the present invention.

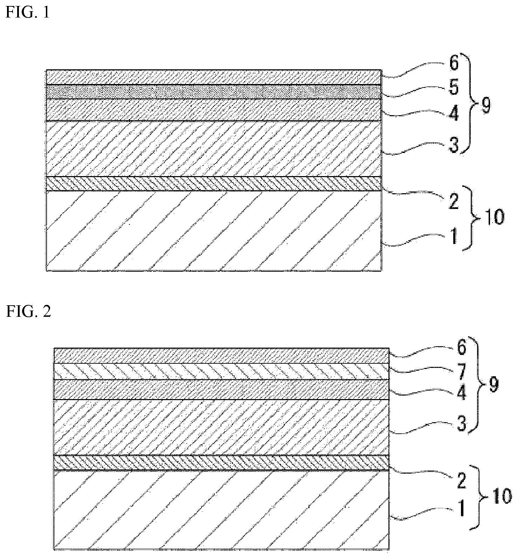

Examples of the laminated structure of transfer film for three-dimensional molding according to the present invention include a laminated structure in which a transferring base material and a surface protective layer are laminated in this order; a laminated structure in which a transferring base material, a surface protective layer and a primer layer are laminated in this order; a laminated structure in which a transferring base material, a release layer, a surface protective layer and a primer layer are laminated in this order; a laminated structure in which a transferring base material, a release layer, a surface protective layer, a primer layer and a decorative layer are laminated in this order; a laminated structure in which a transferring base material, a release layer, a surface protective layer, a primer layer, a decorative layer and an adhesive layer are laminated in this order; and a laminated structure in which a transferring base material, a release layer, a surface protective layer, a primer layer, a transparent resin layer and an adhesive layer are laminated in this order. As one aspect of the laminated structure of the transfer film for three-dimensional molding according to the present invention, Fig. 1 shows a schematic view of a cross section structure of one form of a transfer film for three-dimensional molding in which a transferring base material, a release layer, a surface protective layer, a primer layer, a decorative layer and an adhesive layer are laminated in this order. As one aspect of the laminated structure of the transfer film for three-dimensional molding according to the present invention, Fig. 2 shows a schematic view of a cross section structure of one form of a transfer film for three-dimensional molding in which a transferring base material, a release layer, a surface protective layer, a primer layer, a transparent resin layer and an adhesive layer are laminated in this order.

### Composition of each layer that forms transfer film for three-dimensional molding [Support 10]

The transfer film for three-dimensional molding according to the present invention includes as the support 10 the transferring base material 1, and the release layer 2 as necessary. The surface protective layer 3 formed on the transferring base material 1, and the primer layer 4, decorative layer 5, adhesive layer 6, transparent resin layer 7 and so on which are additionally provided as necessary form the transfer layer 9. In the present invention, the transfer film for three-dimensional molding and the molded resin are integrally molded, the support 10 and the transfer layer 9 are then peeled from each other at the interface therebetween, and the support 10 is separated and removed to obtain a resin molded article.

### (Transferring base material 1)

In the present invention, the transferring base material 1 is used as the support 10 which serves as a support member in the transfer film for three-dimensional molding. The transferring base material 1 for use in the present invention is selected in consideration of suitability for vacuum molding, and typically a resin sheet formed of a thermoplastic resin is used. Examples of the thermoplastic resin include polyester resins; acrylic resins; polyolefin resins such as polypropylene and polyethylene; polycarbonate resins; acrylonitrile-butadiene-styrene resins (ABS resins); and vinyl chloride resins.

In the present invention, it is preferable to use a polyester sheet as the transferring base material 1 from the viewpoint of heat resistance, dimensional stability, moldability and versatility. The polyester resin that forms the polyester sheet refers to a polymer including an ester group obtained by polycondensation from a polyfunctional carboxylic acid and a polyhydric alcohol, and may be preferably polyethylene terephthalate (PET), polybutylene terephthalate (PBT), polyethylene naphthalate (PEN) or the like, with polyethylene terephthalate (PET) being especially preferable from the viewpoint of heat resistance and dimensional stability.

The transferring base material 1 may have an irregular shape on at least one surface as necessary for the purpose of, for example, imparting an irregular shape to a surface of the later-described surface protective layer 3. By laminating the surface protective layer 3 directly on a surface of the transferring base material 1 which has an irregular shape, an irregular shape matching the irregular shape on the transferring base material 1 can be formed on the surface of the surface protective layer 3. For example, by laminating the surface protective layer 3 immediately above the transferring base material 1 having a fine irregular shape on a surface thereof, the irregular shape can be transferred to a surface of the surface protective layer 3 to impart a matted design to the surface of the surface protective layer 3. A surface having such a fine irregular shape has the problem that a load is borne at points, so that the irregular shape is collapsed, and therefore the surface is generally more easily scratched as compared to a flat surface capable of bearing a load over a plane, but in the transfer film according to the present invention, the scratch resistance of the surface is improved because the surface protective layer 3 is formed of a cured product of an ionizing radiation curable resin composition containing a polycarbonate (meth)acrylate, wherein the acrylic resin is a homopolymer of a (meth)acrylic acid ester, a copolymer of two or more different (meth)acrylic acid ester monomers, or a copolymer of a (meth)acrylic acid ester and another monomer, and wherein a content of the acrylic resin contained in the ionizing radiation curable resin composition is 25 parts by mass or less based on 100 parts by mass of solid components other than the acrylic resin in the ionizing radiation curable resin composition. Accordingly, in the present invention, excellent scratch resistance is exhibited even the surface protective layer 3 having a matted design based on a fine irregular shape exhibits excellent scratch resistance.

Examples of the method for forming an irregular shape on a surface of the transferring base material 1 include physical methods such as sandblasting, hairline processing, laser processing and embossing, chemical methods such as corrosion treatment with a chemical or a solvent, and a method in which fine particles are included in the transferring base material 1 to express a shape of the fine particles on a surface of the transferring base material 1. Among them, a method in which fine particles are included in the transferring base material 1 is suitably used for transferring a fine irregular shape to the surface protective layer 3 to express a matted design.

Typical examples of the fine particles include synthetic resin particles and inorganic particles, and it is especially preferable to use synthetic resin particles for improving three-dimensional moldability. The synthetic resin particles are not particularly limited as long as they are particles formed of a synthetic resin, and examples thereof include acrylic beads, urethane beads, silicone beads, nylon beads, styrene beads, melamine beads, urethane acryl beads, polyester beads and polyethylene beads. Among these synthetic resin particles, acrylic beads, urethane beads and silicone beads are preferable for forming an irregular shape excellent in scratch resistance on the surface protective layer 3. Examples of the inorganic particles include those of calcium carbonate, magnesium carbonate, calcium sulfate, barium sulfate, lithium phosphate, magnesium phosphate, calcium phosphate, aluminum oxide, silicon oxide and kaolin. One kind of the fine particles may be used, or two or more kinds of the fine particles may be used in combination. The particle size of the fine particle is preferably about 0.3 to 25 µm, more preferably about 0.5 to 5 µm. In the present invention, the particle size of the fine particle is measured by an injection-type dry measurement method in which a powder to be measured is injected from a nozzle by means of compressed air, and dispersed in the air to perform measurement using a laser diffraction-type particle size distribution measurement apparatus (SALD-2100-WJA1 manufactured by Shimadzu Corporation).

The content of the fine particles contained in the transferring base material 1 is not particularly limited as long as a desired irregular shape is formed on the surface protective layer 3, and for example, it is preferably about 1 to 100 parts by mass, more preferably 5 to 80 parts by mass based on 100 parts by mass of the resin contained in the transferring base material 1. Various kinds of stabilizers, lubricants, antioxidants, antistatic agents, defoaming agents, fluorescent whitening agents and so on can be blended in the transferring base material 1 as necessary.

The polyester sheet to be suitably used as the transferring base material 1 in the present invention is produced, for example, in the following manner. First, the polyester-based resin and other raw materials are fed into a well-known melt extrusion apparatus such as an extruder, and heated to a temperature equal to or higher than the melting point of the polyester-based resin to be melted. The molten polymer is then rapidly cooled and solidified on a rotary cooling drum while being extruded so as to have a temperature equal to or lower than the glass transition temperature, so that a substantially noncrystalline unoriented sheet is obtained. The sheet is biaxially stretched to be sheeted, and is subjected to heat setting to obtain the polyester sheet. Here, the stretching method may be sequential biaxial stretching or simultaneous biaxial stretching. The sheet may also be stretched again in a longitudinal and/or lateral direction before or after being subjected to heat setting. In the present invention, the draw ratio is preferably 7 or less, more preferably 5 or less, further preferably 3 or less in terms of an area ratio for obtaining sufficient dimensional stability. When the resulting polyester sheet is used in a transfer film for three-dimensional molding, the transfer film for three-dimensional molding is not shrunk again in a temperature range where the molded resin is injected, and thus a sheet strength required in the temperature range can be obtained as long as the draw ratio is in a range as described above. The polyester sheet may be produced as described above, or may be obtained as a commercial product.

In addition, when the later-described release layer 2 is provided, one or both of the surfaces of the transferring base material 1 can be subjected to a physical or chemical surface treatment such as an oxidation method or a roughening method as desired for the purpose of improving adhesion with the release layer 2. Examples of the oxidation method include corona discharge treatment, chromium oxidation treatment, flame treatment, hot air treatment and ozone/ultraviolet ray treatment methods, and examples of the roughening method include sand blasting methods and solvent treatment methods. The surface treatment is appropriately selected according to the type of the transferring base material 1, but in general, a corona discharge treatment method is preferably used from the viewpoint of an effect, handling characteristics and so on. The transferring base material 1 may be subjected to such a treatment that an easily adhesive agent layer is formed for the purpose of, for example, enhancing interlayer adhesion between the transferring base material 1 and a layer provided thereon. When a commercial product is used as the polyester sheet, one subjected to the above-mentioned surface treatment beforehand, or one provided with an easily adhesive layer can be used as the commercial product.

The thickness of the transferring base material 1 is normally 10 to 150 µm, preferably 10 to 125 µm, more preferably 10 to 80 µm. As the transferring base material 1, a single-layer sheet of the above-mentioned resin, or a multi-layer sheet of the same resin or different resins can be used.

### (Release Layer 2)

The release layer 2 is provide on a surface of the transferring base material 1, on which the surface protective layer 3 is laminated, as necessary for the purpose of, for example, improving separability between the transferring base material 1 and the surface protective layer 3. The release layer 2 may be a solid release layer covering the whole surface (wholly solid), or may be partially provided. Normally, the release layer 2 is preferably a solid release layer in view of separability.

The release layer 2 can be formed using the following resins alone or a resin composition obtained by mixing two or more thereof: thermoplastic resins such as silicone-based resins, fluorine-based resins, acryl-based resins (including, for example, acryl-melamine-based resins), polyester-based resins, polyolefin-based resins, polystyrene-based resins, polyurethane-based resins, cellulose-based resins, vinyl chloride-vinyl acetate-based copolymer resins and cellulose nitrate; copolymers of monomers that form the thermoplastic resins; ionizing radiation curable resins; and (meth)acrylic acid or urethane-modified products of these resins. Among them, acryl-based resins, polyester-based resins, polyolefin-based resins, polystyrene-based resins, copolymers of monomers that form these resins, and urethane-modified products thereof are preferable, and more specific examples include acryl-melamine-based resins alone, acryl-melamine-based resin-containing compositions, resin compositions obtained by mixing a polyester-based resin with a urethane-modified product of a copolymer of ethylene and acrylic acid, and resin compositions obtained by mixing an acryl-based resin with an emulsion of a copolymer of styrene and acryl. It is especially preferable that the release layer 2 be formed of an acryl-melamine-based resin alone, or a composition containing 50% by mass or more of an acryl-melamine-based resin among the above-mentioned resins.

The release layer 2 may have an irregular shape on a surface on the surface protective layer 3 side for the purpose of, for example, imparting an irregular shape to a surface of the later-described surface protective layer 3. By laminating the surface protective layer 3 directly on a surface of the release layer 2 which has an irregular shape, an irregular shape matching the irregular shape on the release layer 2 can be formed on the surface protective layer 3. For example, by laminating the surface protective layer 3 immediately above the release layer 2 having a fine irregular shape on a surface thereof, the irregular shape can be transferred to a surface of the surface protective layer 3 to impart a matted design to the surface of the surface protective layer 3. As described above in the section "Transferring base material 1", a surface having a fine irregular shape exhibiting a matted design has the problem that the surface is generally easily scratched, but in the present invention, even the surface protective layer 3 having a matted design based on a fine irregular shape exhibits excellent scratch resistance.

Examples of the method for forming an irregular shape on a surface of the release layer 2 may include those identical to the methods described above in the section "Transferring base material 1". Among these methods, a method in which fine particles are included in the release layer 2 is preferable for transferring a fine irregular shape to the surface protective layer 3 to express a matted design, and a method in which synthetic resin particles are included is especially preferable for improving three-dimensional moldability.

The content of the fine particles contained in the release layer 2 is not particularly limited as long as a desired irregular shape is formed on the surface protective layer 3, and for example, it is about 1 to 100 parts by mass, preferably 5 to 80 parts by mass based on 100 parts by mass of the resin contained in the release layer 2.

When the release layer 2 contains fine particles, it is preferable that the release layer 2 be formed of a cured product of a resin composition containing fine particles and an ionizing radiation curable resin. In the transfer film for three-dimensional molding according to the present invention, the release layer 2 is formed of a cured product as described above, and the surface protective layer 3 is formed of a cured product of an ionizing radiation curable resin composition containing a polycarbonate (meth)acrylate, so that a fine irregular shape resulting from fine particles can be properly transferred to a surface of the surface protective layer 3 to impart a matted design excellent in scratch resistance to the surface of the surface protective layer 3. Hereinafter, the ionizing radiation curable resin to be used for formation of the release layer 2 will be described in detail.

### (Ionizing Radiation Curable Resin)

The ionizing radiation curable resin to be used for formation of the release layer 2 is a resin that is crosslinked and cured when irradiated with an ionizing radiation, and specific examples thereof include those in which at least one of prepolymers, oligomers and monomers each having a polymerizable unsaturated bond or an epoxy group in the molecule is appropriately mixed. Here, the ionizing radiation is as described later in the section "Surface protective layer 3".

As the monomer to be used as an ionizing radiation curable resin, (meth)acrylate monomers having a radical-polymerizable unsaturated group in the molecule are suitable, and among them, polyfunctional (meth)acrylate monomers are preferable. The polyfunctional (meth)acrylate monomer may be a (meth)acrylate monomer having two or more polymerizable unsaturated bonds in the molecule (di- or more functional), preferably three or more polymerizable unsaturated bonds in the molecule (tri- or more functional). Specific examples of the polyfunctional (meth)acrylate include ethylene glycol di(meth)acrylate, propylene glycol di(meth)acrylate, 1,4-butanediol di(meth)acrylate, 1,6-hexanediol di(meth)acrylate, neopentyl glycol di(meth)acrylate, polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphoric acid di(meth)acrylate, allylated cyclohexyl di(meth)acrylate, isocyanurate di(meth)acrylate, trimethylolpropane tri(meth)acrylate, ethylene oxide-modified trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl)isocyanurate, propionic acid-modified dipentaerythritol penta(meth)acrylate, dipentaerythritol hexa(meth)acrylate, ethylene oxide-modified dipentaerythritol hexa(meth)acrylate and caprolactone-modified dipentaerythritol hexa(meth)acrylate. These monomers may be used alone, or may be used in combination of two or more thereof.

As the oligomer to be used as an ionizing radiation curable resin, (meth)acrylate oligomers having a radical-polymerizable unsaturated group in the molecule are suitable, and among them, polyfunctional (meth)acrylate oligomers having two or more polymerizable unsaturated bonds in the molecule (di-or-more functional) are preferable. Examples of the polyfunctional (meth)acrylate oligomer include polycarbonate (meth)acrylate, acrylic silicone (meth)acrylate, urethane (meth)acrylate, epoxy (meth)acrylate, polyester (meth)acrylate, polyether (meth)acrylate, polybutadiene (meth)acrylate, silicone (meth)acrylate, and oligomers having a cation-polymerizable functional group in the molecule (e.g. novolac-type epoxy resins, bisphenol-type epoxy resins, aliphatic vinyl ethers, aromatic vinyl ethers and so on). Here, the polycarbonate (meth)acrylate is not particularly limited as long as it has a carbonate bond on the polymer main chain, and has a (meth)acrylate group at the end or side chain, and the polycarbonate (meth)acrylate can be obtained by esterifying a polycarbonate polyol with (meth)acrylic acid. The polycarbonate (meth)acrylate may be, for example, urethane (meth)acrylate having a polycarbonate backbone. The urethane (meth)acrylate having a polycarbonate backbone is obtained by, for example, reacting a polycarbonate polyol, a polyvalent isocyanate compound and hydroxy (meth)acrylate. The acrylic silicone (meth)acrylate can be obtained by radical-copolymerizing a silicone macro-monomer with a (meth)acrylate monomer. The urethane (meth)acrylate can be obtained by, for example, esterifying a polyurethane oligomer with (meth)acrylic acid, the polyurethane oligomer being obtained by reaction of a polyether polyol, a polyester polyol or a caprolactone-based polyol with a polyisocyanate compound. The epoxy (meth)acrylate can be obtained by, for example, reacting (meth)acrylic acid with an oxirane ring of a relatively low-molecular-weight bisphenol-type epoxy resin or novolac-type epoxy resin to perform esterification. Carboxyl-modified epoxy (meth)acrylate obtained by partially modifying the epoxy (meth)acrylate with a dibasic carboxylic anhydride can also be used. For example, the polyester (meth)acrylate can be obtained by esterifying hydroxyl groups of a polyester oligomer with (meth)acrylic acid, the polyester oligomer being obtained by condensation of a polyvalent carboxylic acid and a polyhydric alcohol and having a hydroxyl group at each of both ends, or by esterifying a hydroxyl group at the end of an oligomer with (meth)acrylic acid, the oligomer being obtained by adding an alkylene oxide to a polyvalent carboxylic acid. The polyether (meth)acrylate can be obtained by esterifying a hydroxyl group of a polyether polyol with (meth)acrylic acid. The polybutadiene (meth)acrylate can be obtained by adding (meth)acrylic acid to the side chain of a polybutadiene oligomer. The silicone (meth)acrylate can be obtained by adding (meth)acrylic acid to the end or side chain of a silicone having a polysiloxane bond in the main chain. Among them, polycarbonate (meth)acrylate, urethane (meth)acrylate and the like are especially preferable as polyfunctional (meth)acrylate oligomers. These oligomers may be used alone, or may be used in combination of two or more thereof.

Among the above-mentioned ionizing radiation curable resins, at least one of polycarbonate (meth)acrylate and urethane (meth)acrylate is preferably used for properly transferring a fine irregular shape resulting from fine particles to a surface of the surface protective layer 3 to impart a matted design excellent in scratch resistance to the surface of the surface protective layer 3.

When the release layer 2 is formed using an ionizing radiation curable resin, the formation of the release layer 2 is performed by, for example, preparing an ionizing radiation curable resin composition containing fine particles and an ionizing radiation curable resin, and applying and crosslinking/curing the ionizing radiation curable resin composition. The viscosity of the ionizing radiation curable resin composition may be a viscosity that allows an uncured resin layer to be formed by an application method as described later.

In the present invention, an uncured resin layer is formed by applying a prepared application liquid onto by a known method such as gravure coating, bar coating, roll coating, reverse roll coating or comma coating, preferably gravure coating so that the above-mentioned desired thickness is obtained.

The uncured resin layer formed in this manner is irradiated with an ionizing radiation such as an electron beam or an ultraviolet ray to cure the uncured resin layer, so that the release layer 2 is formed. Here, when an electron beam is used as the ionizing radiation, an accelerating voltage thereof can be appropriately selected according to a resin to be used and a thickness of the layer, but the accelerating voltage is normally about 70 to 300 kV.

In irradiation of an electron beam, the transmission capacity increases as the accelerating voltage becomes higher, and therefore when a resin that is easily degraded by irradiation of an electron beam is used in a layer under the release layer 2, an accelerating voltage is selected so that the transmission depth of the electron beam is substantially equal to the thickness of the release layer 2. Accordingly, a layer situated under the release layer 2 can be inhibited from being excessively irradiated with an electron beam, so that degradation of the layers by an excessive electron beam can be minimized.

The amount of radiation is preferably an amount with which the crosslinking density of the release layer 2 is saturated, and the amount of radiation is selected within a range of normally 5 to 300 kGy (0.5 to 30 Mrad), preferably 10 to 50 kGy (1 to 5 Mrad).

Further, the electron beam source is not particularly limited, and various kinds of electron beam accelerators can be used such as, for example, those of Cockcroft-Walton type, van de graaff type, tuned transformer type, insulated core transformer type, linear type, dynamitron type and high frequency type.

When an ultraviolet ray is used as the ionizing radiation, it is practical to radiate light including an ultraviolet ray having a wavelength of 190 to 380 nm. The ultraviolet ray source is not particularly limited, and examples thereof include highpressure mercury lamps, low-pressure mercury lamps, metal halide lamps, carbon arc lamps and ultraviolet-ray emitting diodes (LED-UV).

The thickness of the release layer 2 is normally about 0.01 to 5 µm, preferably about 0.05 to 3 µm.

### (Transfer layer 9)

In the transfer film for three-dimensional molding according to the present invention, the surface protective layer 3 formed on the support 10, and the primer layer 4, decorative layer 5, adhesive layer 6, transparent resin layer 7 and so on which are additionally provided as necessary form the transfer layer 9. In the present invention, the transfer film for three-dimensional molding and the molded resin are integrally molded, the support 10 and the transfer layer 9 are then peeled from each other at the interface therebetween to obtain a resin molded article in which the transfer layer 9 of the transfer film for three-dimensional molding is transferred to the molded resin layer 8. Hereinafter, these layers will be described in detail.

### [Surface Protective Layer 3]

The surface protective layer 3 is a layer that is provided on the transfer film for three-dimensional molding in such a manner as to be situated on the outermost surface of a resin molded article for the purpose of improving the scratch resistance, weather resistance, chemical resistance and the like of the resin molded article.

In the present invention, the surface protective layer 3 is formed of a cured product of an ionizing radiation curable resin composition containing polycarbonate (meth)acrylate and an acrylic resin, wherein the acrylic resin is a homopolymer of a (meth)acrylic acid ester, a copolymer of two or more different (meth)acrylic acid ester monomers, or a copolymer of a (meth)acrylic acid ester and another monomer, and wherein a content of the acrylic resin contained in the ionizing radiation curable resin composition is 25 parts by mass or less based on 100 parts by mass of solid components other than the acrylic resin in the ionizing radiation curable resin composition. Since the surface protective layer 3 has the above-mentioned configuration, the transfer film for three-dimensional molding according to the present invention is excellent in moldability, and capable of imparting excellent scratch resistance and chemical resistance to the resin molded article. Details of a mechanism in which the transfer film for three-dimensional molding according to the present invention has the above-mentioned excellent characteristics are not clear, but can be considered, for example, as follows. Specifically, in the transfer film according to the present invention, it is considered that since in addition to a polycarbonate (meth)acrylate having a relatively low glass transition point (Tg), an acrylic resin having a relatively high glass transition point (Tg) is added in the ionizing radiation curable resin composition that forms the surface protective layer 3, so that the glass transition temperature of the surface protective layer increases, and as a result, the chemical resistance of the surface protective layer is effectively improved. Further, it is considered that since the surface protective layer 3 is formed of a cured product of an ionizing radiation curable resin composition containing a polycarbonate (meth)acrylate, the surface protective layer 3 has high flexibility and elasticity, so that the transfer film for three-dimensional molding is excellent in three-dimensional moldability as a transfer film, and scratch resistance is improved because fine scratches on the surface are flattened again with time.

### <Ionizing radiation curable resin>

The ionizing radiation curable resin to be used for formation of the surface protective layer 3 is a resin that is crosslinked and cured when irradiated with an ionizing radiation, and specific examples thereof include those in which at least one of prepolymers, oligomers and monomers each having a polymerizable unsaturated bond or an epoxy group in the molecule is appropriately mixed. Here, the ionizing radiation means an electromagnetic wave or charged particle ray having an energy quantum capable of polymerizing or crosslinking a molecule, and normally an ultraviolet (UV) ray or an electron beam (EB) is used, but the ionizing radiations also include electromagnetic waves such as an X-ray and a γ-ray, and charged particle rays such as an α-ray and an ion beam. Among ionizing radiation curable resins, electron beam-curable resins are suitably used in formation of the surface protective layer 3 because they can be made solventless, do not require an initiator for photopolymerization, and exhibit stable curing characteristics.

The surface protective layer 3 is formed of a cured product of an ionizing radiation curable resin composition containing a polycarbonate (meth)acrylate as an ionizing radiation curable resin, and an acrylic resin, wherein the acrylic resin is a homopolymer of a (meth)acrylic acid ester, a copolymer of two or more different (meth)acrylic acid ester monomers, or a copolymer of a (meth)acrylic acid ester and another monomer, and wherein a content of the acrylic resin contained in the ionizing radiation curable resin composition is 25 parts by mass or less based on 100 parts by mass of solid components other than the acrylic resin in the ionizing radiation curable resin composition. In the present invention, the "(meth)acrylate" means an "acrylate" or a "methacrylate", and the same applies to other similar terms.

The polycarbonate (meth)acrylate for use in the present invention is not particularly limited as long as it has a carbonate bond on the polymer main chain, and has a (meth)acrylate group at the end or side chain, and the polycarbonate (meth)acrylate can be obtained by esterifying a polycarbonate polyol with (meth)acrylic acid. The (meth)acrylate is preferably di-or-more-functional from the viewpoint of crosslinking and curing. The polycarbonate (meth)acrylate may be, for example, urethane (meth)acrylate having a polycarbonate backbone. The urethane (meth)acrylate having a polycarbonate backbone is obtained by, for example, reacting a polycarbonate polyol, a polyvalent isocyanate compound and hydroxy (meth)acrylate.

The polycarbonate (meth)acrylate is obtained by, for example, converting some or all of hydroxyl groups of a polycarbonate polyol into a (meth)acrylate (acrylic acid ester or methacrylic acid ester). The esterification reaction can be carried out by a usual esterification reaction. Examples thereof include 1) a method in which a polycarbonate polyol and an acrylic acid halide or methacrylic acid halide are condensed in the presence of a base; 2) a method in which a polycarbonate polyol and an acrylic anhydride or methacrylic anhydride are condensed in the presence of a catalyst; and 3) a method in which a polycarbonate polyol and an acrylic acid or methacrylic acid are condensed in the presence of an acid catalyst.

The polycarbonate polyol is a polymer having a carbonate bond in the polymer main chain, and having 2 or more, preferably 2 to 50, more preferably 3 to 50 hydroxyl groups at the end or side chain. A typical method for producing the polycarbonate polyol is a method using a polycondensation reaction of a diol compound (A), a polyhydric alcohol (B) of tri- or more valence, and a compound (C) as a carbonyl component. The diol compound (A) which is used as a raw material is represented by the general formula HO-R¹-OH. Here, R¹ is a divalent hydrocarbon with a carbon number of 2 to 20, and may include an ether bond in the group. R¹ is, for example, a linear or branched alkylene group, a cyclohexylene group or a phenylene group.

Specific examples of the diol compound include ethylene glycol, 1,2-propylene glycol, diethylene glycol, dipropylene glycol, triethylene glycol, polyethylene glycol, neopentyl glycol, 1,3-propanediol, 1,4-butanediol, 1,5-pentanediol, 3-methyl-1,5-pentanediol, 1,6-hexanediol, 1,8-octanediol, 1,3-bis(2-hydroxyethoxy)benzene, 1,4-bis(2-hydroxyethoxy)benzene, neopentyl glycol, 1,4-cyclohexanediol and 1,4-cyclohexanedimethanol. These diols may be used alone, or may be used in combination of two or more thereof.

Examples of the polyhydric alcohol (B) of tri- or more valence may include alcohols such as trimethylolpropane, trimethylolethane, pentaerythritol, ditrimethylolpropane, dipentaerythritol, glycerin and sorbitol. The polyhydric alcohol may be an alcohol having a hydroxyl group with 1 to 5 equivalents of ethylene oxide, propylene oxide or other alkylene oxide added to the hydroxyl group of the polyhydric alcohol. These polyhydric alcohols may be used alone, or may be used in combination of two or more thereof.

The compound (C) as a carbonyl component is any compound selected from a carbonic acid diester, phosgene and an equivalent thereof. Specific examples of the compound include carbonic acid diesters such as dimethyl carbonate, diethyl carbonate, diisopropyl carbonate, diphenyl carbonate, ethylene carbonate and propylene carbonate; phosgene; halogenated formic acid esters such as methyl chloroformate, ethyl chloroformate and phenyl chloroformate. These compounds may be used alone, or may be used in combination of two or more thereof.

The polycarbonate polyol is synthesized subjecting a diol compound (A), a polyhydric alcohol (B) of tri- or more valence, and a compound (C) as a carbonyl component to a polycondensation reaction under general conditions. For example, the charged molar ratio of the diol compound (A) and the polyhydric alcohol (B) is preferably in the range of 50 : 50 to 99 : 1, and the charged molar ratio of the compound (C) as a carbonyl component to the diol compound (A) and the polyhydric alcohol (B) is preferably 0.2 to 2 equivalents to hydroxyl groups of the diol compound and the polyhydric alcohol.

The equivalent number (eq./mol) of hydroxyl groups existing in the polycarbonate polyol after the polycondensation reaction with the above-mentioned charged ratio is 3 or more, preferably 3 to 50, more preferably 3 to 20 on average in one molecule. When the equivalent number is in a range as described above, a necessary amount of (meth)acrylate groups are formed through an esterification reaction as described later, and moderate flexibility is imparted to the polycarbonate (meth)acrylate resin. The terminal functional groups of the polycarbonate polyol are usually OH groups, but some of them may be carbonate groups.

The method for producing a polycarbonate polyol as described above is described in, for example, Japanese Patent Laid-open Publication No. S64-1726. The polycarbonate polyol can also be produced through an ester exchange reaction of a polycarbonate diol and a polyhydric alcohol of tri- or more valence as described in Japanese Patent Laid-Open Publication No. H03-181517.

The molecular weight of the polycarbonate (meth)acrylate for use in the present invention is preferably 500 or more, more preferably 1,000 or more, further preferably 2,000 or more in terms of a weight average molecular weight measured by GPC analysis and calculated in terms of standard polystyrene. The upper limit of the weight average molecular weight of the polycarbonate (meth)acrylate is not particularly limited, but it is preferably 100,000 or less, more preferably 50,000 or less for controlling the viscosity so as not to be excessively high. The weight average molecular weight of the polycarbonate (meth)acrylate is further preferably not less than 2,000 and not more than 50,000, especially preferably 5,000 to 20,000 for securing both scratch resistance and three-dimensional moldability.

It is preferable that in the ionizing radiation curable resin composition, the polycarbonate (meth)acrylate be used together with a polyfunctional (meth)acrylate. In other words, it is preferable that the ionizing radiation curable resin composition further contain a polyfunctional (meth)acrylate. The mass ratio of the polycarbonate (meth)acrylate and the polyfunctional (meth)acrylate is more preferably 98 : 2 to 50 : 50 (polycarbonate (meth)acrylate : polyfunctional (meth)acrylate). When the mass ratio of the polycarbonate (meth)acrylate and the polyfunctional (meth)acrylate is less than 98 : 2 (i.e. the amount of the polycarbonate (meth)acrylate is 98% by mass or less based on the total amount of the two components), scratch resistance is further improved. On the other hand, when the mass ratio of the polycarbonate (meth)acrylate and the polyfunctional (meth)acrylate is more than 50 : 50 (i.e. the amount of the polycarbonate (meth)acrylate is 50% by mass or more based on the total amount of the two components), three-dimensional moldability is further improved. The mass ratio of the polycarbonate (meth)acrylate and the polyfunctional (meth)acrylate is preferably 95 : 5 to 60 : 40.

The polyfunctional (meth)acrylate for use in the present invention is not particularly limited as long as it is a di-or-more-functional (meth)acrylate. The polyfunctional (meth)acrylate is preferably a tri-or-more-functional (meth)acrylate from the viewpoint of curability. Here, the term "difunctional" means that two ethylenically unsaturated bonds f (meth)acryloyl groups} exist in the molecule.

The polyfunctional (meth)acrylate may be either an oligomer or a monomer, but it is preferably a polyfunctional (meth)acrylate oligomer for improving three-dimensional moldability.

Examples of the polyfunctional (meth)acrylate oligomer include urethane (meth)acrylate-based oligomers, epoxy (meth)acrylate-based oligomers, polyester (meth)acrylate-based oligomers and polyether (meth)acrylate-based oligomers. Here, the urethane (meth)acrylate-based oligomer can be obtained by, for example, esterifying a polyurethane oligomer with (meth)acrylic acid, the polyurethane oligomer being obtained by reaction of a polyether polyol or a polyester polyol with a polyisocyanate. The epoxy (meth)acrylate-based oligomer can be obtained by, for example, reacting (meth)acrylic acid with an oxirane ring of a relatively low-molecular-weight bisphenol-type epoxy resin or novolac-type epoxy resin to perform esterification. A carboxyl-modified epoxy (meth)acrylate oligomer obtained by partially modifying the epoxy (meth)acrylate-based oligomer with a dibasic carboxylic anhydride can also be used. For example, the polyester (meth)acrylate-based oligomer can be obtained by esterifying hydroxyl groups of a polyester oligomer with (meth)acrylic acid, the polyester oligomer being obtained by condensation of a polyvalent carboxylic acid and a polyhydric alcohol and having a hydroxyl group at each of both ends, or by esterifying a hydroxyl group at the end of an oligomer with (meth)acrylic acid, the oligomer being obtained by adding an alkylene oxide to a polyvalent carboxylic acid. The polyether (meth)acrylate-based oligomer can be obtained by esterifying a hydroxyl group of a polyether polyol with (meth)acrylic acid.

Further, other polyfunctional (meth)acrylate oligomers include highly hydrophobic polybutadiene (meth)acrylate-based oligomers having a (meth)acrylate group on the side chain of a polybutadiene oligomer, silicone (meth)acrylate-based oligomers having a polysiloxane bond on the main chain, and aminoplast resin (meth)acrylate-based oligomers obtained by modifying an aminoplast resin having many reactive groups in a small molecule.

Specific examples of the polyfunctional (meth)acrylate monomer include ethylene glycol di(meth)acrylate, propylene glycol di(meth)acrylate, 1,4-butanediol di(meth)acrylate, 1,6-hexanediol di(meth)acrylate, neopentyl glycol di(meth)acrylate, polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphoric acid di(meth)acrylate, allylated cyclohexyl di(meth)acrylate, isocyanurate di(meth)acrylate, trimethylolpropane tri(meth)acrylate, ethylene oxide-modified trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl)isocyanurate, propionic acid-modified dipentaerythritol penta(meth)acrylate, dipentaerythritol hexa(meth)acrylate, ethylene oxide-modified dipentaerythritol hexa(meth)acrylate and caprolactone-modified dipentaerythritol hexa(meth)acrylate. The polyfunctional (meth)acrylate oligomers and polyfunctional (meth)acrylate monomers described above may be used alone, or may be used in combination of two or more thereof.

In the present invention, for the purpose of, for example, reducing the viscosity of the polyfunctional (meth)acrylate, a monofunctional (meth)acrylate can be appropriately used in combination with the polyfunctional (meth)acrylate within the bounds of not hindering the purpose of the present invention. Examples of the monofunctional (meth)acrylate include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, lauryl (meth)acrylate, stearyl (meth)acrylate and isobornyl (meth)acrylate. These monofunctional (meth)acrylates may be used alone, or may be used in combination of two or more thereof.

The content of the polycarbonate (meth)acrylate in the ionizing radiation curable resin composition that forms the surface protective layer 3 is not particularly limited, but it is preferably about 98 to 50% by mass, more preferably about 90 to 65% by mass for further improving three-dimensional moldability and scratch resistance.

### <Acrylic resin>

In addition, in the present invention, the acrylic resin contained in the ionizing radiation curable resin composition that forms the surface protective layer 3 is a homopolymer of a (meth)acrylic acid ester, a copolymer of two or more different (meth)acrylic acid ester monomers, or a copolymer of a (meth)acrylic acid ester and another monomer. Preferably, examples of the acrylic resin include (meth)acrylic resins composed of homopolymers or copolymers including (meth)acrylic acid esters such as polymethyl (meth)acrylate, polyethyl (meth)acrylate, polypropyl (meth)acrylate, polybutyl (meth)acrylate, methyl (meth)acrylate-butyl (meth)acrylate copolymers, ethyl (meth)acrylate-butyl (meth)acrylate copolymers, ethylene-methyl (meth)acrylate copolymers and styrene-methyl (meth)acrylate copolymers. Among them, polymethyl (meth)acrylate is especially preferable from the viewpoint improving chemical resistance.

The weight average molecular weight of the acrylic resin is not particularly limited, but is preferably about 10,000 to 150,000, more preferably about 10,000 to 40,000 from the viewpoint of imparting excellent scratch resistance and chemical resistance to a resin molded article while effectively improving the moldability of the transfer film for three-dimensional molding.

The weight average molecular weight of the acrylic resin in this specification is a value obtained by performing measurement using a gel permeation chromatography method using polystyrene as a standard substance.

In addition, the glass transition temperature (Tg) of the acrylic resin is preferably about 40 to 160°C, more preferably about 80 to 120°C from the viewpoint of imparting excellent scratch resistance and chemical resistance to a resin molded article while effectively improving the moldability of the transfer film for three-dimensional molding.

The glass transition temperature (Tg) of the acrylic resin in this specification is a value measured by a differential scanning calorimeter (DSC).

The content of the acrylic resin in the ionizing radiation curable resin composition that forms the surface protective layer 3 is 25 parts by mass or less, preferably about 0.5 to 25 parts by mass, more preferably 2 to 8 parts by mass based on 100 parts by mass of solid components other than the acrylic resin in the ionizing radiation curable resin composition from the viewpoint of imparting excellent scratch resistance and chemical resistance to a resin molded article while effectively improving the moldability of the transfer film for three-dimensional molding.

### <Curing Agent>

In addition, in the present invention, the ionizing radiation curable resin composition that forms the surface protective layer 3 may further contain a curing agent as necessary. When a curing agent is contained, the chemical resistance of the surface protective layer 3 can be further improved.

The curing agent is not particularly limited, but is preferably an isocyanate compound. The isocyanate compound is not particularly limited as long as it is a compound having an isocyanate group, but polyfunctional isocyanate compounds having two or more isocyanate groups are preferable. Examples of the polyfunctional isocyanate include polyisocyanates such as aromatic isocyanates such as 2,4-tolylene diisocyanate (TDI), xylene diisocyanate (XDI), naphthalene diisocyanate and 4,4-diphenylmethane diisocyanate; and aliphatic (or alicyclic) isocyanates such as 1,6-hexamethylene diisocyanate (HMDI), isophorone diisocyanate (IPDI), methylene diisocyanate (MDI), hydrogenated tolylene diisocyanate and hydrogenated diphenylmethane diisocyanate. Mention is also made of adducts or multimers of these various kinds of isocyanates, for example adducts of tolylene diisocyanate, trimers of tolylene diisocyanate, and blocked isocyanate compounds. The isocyanate compounds may be used alone, or may be used in combination of two or more thereof.

The content of the curing agent in the ionizing radiation curable resin composition that forms the surface protective layer 3 is not particularly limited, but it is preferably about 0.1 to 20 parts by mass, more preferably about 1 to 10 parts by mass, still more preferably 1 to 7 parts by mass based on 100 parts by mass of solid components other than the curing agent in the ionizing radiation curable resin composition for further improving three-dimensional moldability and scratch resistance.

### <Other additive components>

According to desired properties to be imparted to the surface protective layer 3, various kinds of additives can be blended in the ionizing radiation curable resin composition that forms the surface protective layer 3. Examples of the additives include weather resistance improving agents such as ultraviolet absorbers and light stabilizers, abrasion resistance improvers, polymerization inhibitors, crosslinkers, infrared absorbers, antistatic agents, bondability improvers, leveling agents, thixotropy imparting agents, coupling agents, plasticizers, antifoaming agents, fillers, solvents, colorants and matting agents. These additives can be appropriately selected from those that are commonly used, and examples of the matting agent include silica particles and aluminum hydroxide particles. As the ultraviolet absorber and light stabilizer, a reactive ultraviolet absorber and light stabilizer having a polymerizable group such as a (meth)acryloyl group in the molecule can also be used.

### <Thickness of surface protective layer 3>

The thickness of the surface protective layer 3 after curing is not particularly limited, but it is, for example, 1 to 1000 µm, preferably 1 to 50 µm, further preferably 1 to 30 µm. When the thickness of the surface protective layer 3 after curing falls within the above-mentioned range, sufficient properties as a surface protective layer, such as scratch resistance and weather resistance, are obtained, and the resin can be uniformly irradiated with an ionizing radiation, and therefore can be uniformly cured, thus being advantageous in terms of economy. Further, when the thickness of the surface protective layer 3 after curing falls within the above-mentioned range, the three-dimensional moldability of the transfer film for three-dimensional molding is further improved, and therefore high followability to a complicated three-dimensional shape in automobile interior applications or the like can be obtained. Thus, the transfer film for three-dimensional molding according to the present invention is also useful as a transfer film for three-dimensional molding particularly of a member required to have the surface protective layer 3 having a large thickness, e.g. a vehicle exterior component etc. because sufficiently high three-dimensional moldability is obtained even when the thickness of the surface protective layer 3 is made larger as compared to conventional ones.

### <Formation of surface protective layer 3>

Formation of the surface protective layer 3 is performed by, for example, preparing the ionizing radiation curable resin composition containing a polyfunctional polycarbonate (meth)acrylate and an acrylic resin, wherein the acrylic resin is a homopolymer of a (meth)acrylic acid ester, a copolymer of two or more different (meth)acrylic acid ester monomers, or a copolymer of a (meth)acrylic acid ester and another monomer, and wherein a content of the acrylic resin contained in the ionizing radiation curable resin composition is 25 parts by mass or less based on 100 parts by mass of solid components other than the acrylic resin in the ionizing radiation curable resin composition, applying the ionizing radiation curable resin composition, and curing the ionizing radiation curable resin composition through crosslinking. The viscosity of the ionizing radiation curable resin composition may be a viscosity that allows an uncured resin layer to be formed on a surface of the transferring base material 1 or the release layer 2 by an application method as described later.

In the present invention, an uncured resin layer is formed by applying a prepared application liquid onto a surface of the transferring base material 1 or the release layer 2 by a known method such as gravure coating, bar coating, roll coating, reverse roll coating or comma coating, preferably gravure coating so that the above-mentioned thickness is obtained.

The uncured resin layer formed in this manner is irradiated with an ionizing radiation such as an electron beam or an ultraviolet ray to cure the uncured resin layer, so that the surface protective layer 3 is formed. Here, when an electron beam is used as the ionizing radiation, an accelerating voltage thereof can be appropriately selected according to a resin to be used and a thickness of the layer, but the accelerating voltage is normally about 70 to 300 kV.

In irradiation of an electron beam, the transmission capacity increases as the accelerating voltage becomes higher, and therefore when a resin that is easily degraded by irradiation of an electron beam is used in a layer under the surface protective layer 3, an accelerating voltage is selected so that the transmission depth of the electron beam is substantially equal to the thickness of the surface protective layer 3. Accordingly, a layer situated under the surface protective layer 3 can be inhibited from being excessively irradiated with an electron beam, so that degradation of the layers by an excessive electron beam can be minimized.

The amount of radiation is preferably an amount with which the crosslinking density of the surface protective layer 3 is saturated, and the amount of radiation is selected within a range of normally 5 to 300 kGy (0.5 to 30 Mrad), preferably 10 to 50 kGy (1 to 5 Mrad).

Further, the electron beam source is not particularly limited, and various kinds of electron beam accelerators can be used such as, for example, those of Cockcroft-Walton type, van de graaff type, tuned transformer type, insulated core transformer type, linear type, dynamitron type and high frequency type.

When an ultraviolet ray is used as the ionizing radiation, it is practical to radiate light including an ultraviolet ray having a wavelength of 190 to 380 nm. The ultraviolet ray source is not particularly limited, and examples thereof include highpressure mercury lamps, low-pressure mercury lamps, metal halide lamps, carbon arc lamps and ultraviolet-ray emitting diodes (LED-UV).

The surface protective layer 3 thus formed may be treated to give thereto functions such as a hard coat function, an anticlouding coat function, an antifouling coat function, an antiglare coat function, an antireflection coat function, an ultraviolet shielding coat function and an infrared shielding coat function by adding various kinds of additives.

### [Primer layer 4]

The primer layer 4 is a layer that is provided as necessary for the purpose of, for example, improving adhesion between the surface protective layer 3 and a layer situated thereunder (on a side opposite to the support 10). The primer layer 4 can be formed from a primer layer forming resin composition.

The resin to be used in the primer layer forming resin composition is not particularly limited, and examples thereof include urethane resins, acrylic resins, (meth)acrylic-urethane copolymer resins, polyester resins and butyral resins. Among these resins, urethane resins, acrylic resins and (meth)acrylic-urethane copolymer resins are preferable. These resins may be used alone, or may be used in combination of two or more thereof.

As the urethane resin, a polyurethane having a polyol (polyhydric alcohol) as a main agent and an isocyanate as a crosslinker (curing agent) can be used. The polyol may be a compound having two or more hydroxyl groups in the molecule, and specific examples thereof include polyester polyol, polyethylene glycol, polypropylene glycol, acrylic polyol and polyether polyol. Specific examples of the isocyanate include polyvalent isocyanates having two or more isocyanate groups in the molecule; aromatic isocyanates such as 4,4-diphenylmethane diisocyanate; and aliphatic (or alicyclic) isocyanates such as hexamethylene diisocyanate, isophorone diisocyanate, hydrogenated tolylene diisocyanate and hydrogenated diphenylmethane diisocyanate. When an isocyanate is used as a curing agent, the content of the isocyanate in the primer layer forming resin composition is not particularly limited, but it is preferably 3 to 45 parts by mass, more preferably 3 to 25 parts by mass based on 100 parts by mass of the polyol from the viewpoint of adhesion, and printability in lamination of the later-described decorative layer 5.

Among the urethane resins, combinations of acrylic polyol or polyester polyol as a polyol and hexamethylene diisocyanate or 4,4-diphenylmethane diisocyanate as a crosslinker are preferable, and combinations of acrylic polyol and hexamethylene diisocyanate are further preferable from the viewpoint of improvement of adhesion after crosslinking, etc.

The acrylic resin is not particularly limited, and examples thereof include homopolymers of a (meth)acrylic acid ester, copolymers of two or more different (meth)acrylic acid ester monomers, and copolymers of a (meth)acrylic acid ester and other monomers. More specific examples of the (meth)acrylic resin include (meth)acrylic acid esters such as polymethyl (meth)acrylate, polyethyl (meth)acrylate, polypropyl (meth)acrylate, polybutyl (meth)acrylate, methyl (meth)acrylate-butyl (meth)acrylate copolymers, ethyl (meth)acrylate-butyl (meth)acrylate copolymers, ethylene-methyl (meth)acrylate copolymers and styrene-methyl (meth)acrylate.

The (meth)acrylic-urethane copolymer resin is not particularly limited, and examples thereof include acrylic-urethane (polyester urethane) block copolymer-based resins. As the curing agent, the above-mentioned various kinds of isocyanates are used. The ratio of acryl and urethane in the acrylic-urethane (polyester urethane) block copolymer-based resin is not particularly limited, but it is, for example, 9/1 to 1/9, preferably 8/2 to 2/8 in terms of an acrylic/urethane ratio (mass ratio).

The thickness of the primer layer 4 is not particularly limited, but is, for example, about 0.1 to 10 µm, preferably about 1 to 10 µm (i.e. the coating amount is, for example, about 0.1 to 10 g/m², preferably 1 to 10 g/m²). When the primer layer 4 satisfies the above-mentioned thickness, the weather resistance of the transfer film for three-dimensional molding is further improved, and breakage, rupture, whitening and the like of the surface protective layer 3 can be effectively suppressed.

According to desired properties to be imparted, various kinds of additives can be blended in the composition that forms the primer layer 4. Examples of the additives include weather resistance improving agents such as ultraviolet absorbers and light stabilizers, abrasion resistance improvers, polymerization inhibitors, crosslinkers, infrared absorbers, antistatic agents, bondability improvers, leveling agents, thixotropy imparting agents, coupling agents, plasticizers, antifoaming agents, fillers, solvents, colorants and matting agents. These additives can be appropriately selected from those that are commonly used, and examples of the matting agent include silica particles and aluminum hydroxide particles. As the ultraviolet absorber and light stabilizer, a reactive ultraviolet absorber and light stabilizer having a polymerizable group such as a (meth)acryloyl group in the molecule can also be used.

Primer layer 4 is formed by a normal coating method such as gravure coating, gravure reverse coating, gravure offset coating, spinner coating, roll coating, reverse roll coating, kiss coating, wheeler coating, dip coating, solid coating with a silk screen, wire bar coating, flow coating, comma coating, pour coating, blushing or spray coating, or a transfer coating method using a primer layer forming resin composition. Here, the transfer coating method is a method in which a coating film of a primer layer or adhesive layer is formed on a thin sheet (film base material), and thereafter the surface of the intended layer in the transfer film for three-dimensional molding is coated with the coating film.

The primer layer 4 may be formed on the cured surface protective layer 3. On a layer of an ionizing radiation curable resin composition that forms the surface protective layer 3, a layer formed of a primer layer forming composition may be laminated to form the primer layer 4, followed by forming the surface protective layer 3 by irradiating the layer formed of the ionizing radiation curable resin with an ionizing radiation to cure the layer formed of the ionizing radiation curable resin.

### [Decorative Layer 5]

The decorative layer 5 is a layer that is provided as necessary for imparting decorativeness to a resin molded article. The decorative layer 5 normally includes a pattern layer and/or a masking layer. Here, the pattern layer is a layer that is provided for expressing patterned patterns such as figures and characters, and the masking layer is a layer that is usually a wholly solid layer, and is provided for masking coloring of a molded resin etc. The masking layer may be provided inside the pattern layer for bringing the pattern of the pattern layer into prominent, or the masking layer alone may form the decorative layer 5.

The pattern of the patterned layer is not particularly limited, and examples thereof include patterns of woody textures, pebble-like textures, cloth-like textures, sand-like textures, geometrical patterns, characters and so on.

The decorative layer 5 is formed using a printing ink containing a colorant, a binder resin, and a solvent or dispersion medium.

The colorant in the printing ink to be used for formation of the decorative layer 5 is not particularly limited, and examples thereof include metallic pigments formed of scalelike foil powders of metals such as aluminum, chromium, nickel, tin, titanium, iron phosphate, copper, gold, silver and brass, alloys or metal compounds; pearly luster (pearl) pigments formed of foil powders of mica-like iron oxide, titanium dioxide-coated mica, titanium dioxide-coated bismuth oxychloride, bismuth oxychloride, titanium dioxide-coated talc, scalelike foils, colored titanium dioxide-coated mica, basic lead carbonate and the like; fluorescent pigments such as strontium aluminate, calcium aluminate, barium aluminate, zinc sulfide and calcium sulfide; white inorganic pigments such as titanium dioxide, zinc white and antimony trioxide; inorganic pigments such as zinc white, iron red, vermilion, ultramarine blue, cobalt blue, titanium yellow, chrome yellow and carbon black; organic pigments (including dyes) such as isoindolinone yellow, Hansa Yellow A, quinacridone red, permanent red 4R, phthalocyanine blue, indanthrene blue RS and aniline black. These colorants may be used alone, or may be used in combination of two or more thereof.

The binder resin in the printing ink to be used for formation of the decorative layer 5 is not particularly limited, and examples thereof include acryl-based resins, styrene-based resins, polyester-based resins, urethane-based resins, chlorinated polyolefin-based resins, vinyl chloride-vinyl acetate copolymer-based resins, polyvinyl butyral resins, alkyd-based resins, petroleum-based resins, ketone resins, epoxy-based resins, melamine-based resins, fluorine-based resins, silicone-based resins, cellulose derivatives and rubber-based resins. These binder resins may be used alone, or may be used in combination of two or more thereof.

The solvent or dispersion medium in the printing ink to be used for formation of the decorative layer 5 is not particularly limited, and examples thereof include petroleum-based organic solvents such as hexane, heptane, octane, toluene, xylene, ethylbenzene, cyclohexane and methylcyclohexane; ester-based organic solvents such as ethyl acetate, butyl acetate, acetic acid-2-methoxyethyl and acetic acid-2-ethoxyethyl; alcohol-based organic solvents such as methyl alcohol, ethyl alcohol, normal-propyl alcohol, isopropyl alcohol, isobutyl alcohol, ethylene glycol and propylene glycol; ketone-based organic solvents such as acetone, methyl ethyl ketone, methyl isobutyl ketone and cyclohexanone; ether-based organic solvents such as diethyl ether, dioxane and tetrahydrofuran; chlorine-based organic solvents such as dichloromethane, carbon tetrachloride, trichloroethylene and tetrachloroethylene; and water. These solvents or dispersion media may be used alone, or may be used in combination of two or more thereof.

The printing ink to be used for formation of the decorative layer 5 may contain an anti-settling agent, a curing catalyst, an ultraviolet absorber, an antioxidant, a leveling agent, a thickener, a defoaming agent, a lubricant and the like as necessary.

The decorative layer 5 can be formed on the adjacent layer such as, for example, the surface protective layer 3 or the primer layer 4 by a known printing method such as gravure printing, flexographic printing, silk screen printing or offset printing. When the decorative layer 5 is provided in the form of a pattern layer and a masking layer, one layer may be laminated and dried, followed by laminating and drying the other layer.

The thickness of the decorative layer 5 is not particularly limited, and for example, it is about 1 to 40 µm, preferably about 3 to 30 µm.

The decorative layer 5 may be a thin metal film layer. Examples of the metal for forming the thin metal film layer include tin, indium, chromium, aluminum, nickel, copper, silver, gold, platinum, zinc and an alloy containing at least one of these metals. The method for forming a thin metal film layer is not particularly limited, and examples thereof include a vapor deposition method such as a vacuum vapor deposition method, a sputtering method and an ion plating method each using the above-mentioned metal. For improving adhesion with the adjacent layer, the surface or back surface of the thin metal film layer may be provided with a primer layer using a known resin.

### [Adhesive layer 6]

The adhesive layer 6 is a layer that is provided on a back surface (on the molded resin layer 8 side) of the decorative layer 5, the transparent resin layer 7 or the like as necessary for the purpose of, for example, adhesion between the transfer film for three-dimensional molding and the molded resin layer 8. The resin for forming the adhesive layer 6 is not particularly limited as long as it can improve adhesion and bondability between the decorative layer and the molded resin layer, and examples thereof include thermoplastic resins and thermosetting resins. Examples of the thermoplastic resin include acrylic resins, acryl-modified polyolefin resins, chlorinated polyolefin resins, vinyl chloride-vinyl acetate copolymers, thermoplastic urethane resins, thermoplastic polyester resins, polyamide resins and rubber-based resins. The thermoplastic resins may be used alone, or may be used in combination of two or more thereof. Examples of the thermosetting resin include urethane resins and epoxy resins. The thermosetting resins may be used alone, or may be used in combination of two or more thereof.

The adhesive layer 6 is not a layer that is necessarily needed, but it is preferable to provide the adhesive layer 6 when it is conceivable that the transfer film for three-dimensional molding according to the present invention is applied to a decoration method in which the transfer film for three-dimensional molding is bonded onto a previously provided resin molded body, such as, for example, a vacuum press-bonding method as described later. When the decorative sheet is used in a vacuum press-bonding method, it is preferable to form the adhesive layer 6 using, among various resins described above, one that is commonly used as a resin which exhibits bondability under pressure or heating.

The thickness of the adhesive layer 6 is not particularly limited, but it is, for example, about 0.1 to 30 µm, preferably about 0.5 to 20 µm, further preferably about 1 to 8 µm.

### [Transparent resin layer 7]

In the transfer film for three-dimensional molding according to the present invention, a transparent resin layer 7 may be provided as necessary for the purpose of, for example, improving adhesion between the primer layer 4 and the adhesive layer 6. Since the transparent resin layer 7 can improve adhesion between the primer layer 4 and the adhesive layer 6 when the transfer film for three-dimensional molding according to the present invention does not include the decorative layer 5, it is particularly useful to provide the transparent resin layer 7 when the transfer film for three-dimensional molding according to the present invention is used for production of a resin molded article which is required to have transparency. The transparent resin layer 7 is not particularly limited as long as it is transparent, and the transparent resin layer 7 may be colorless and transparent, colored and transparent, semi-transparent or the like. Examples of the resin component that forms the transparent resin layer 7 include the binder resins shown as an example in the decorative layer 5.

The transparent resin layer 7 may contain various kinds of additives such as a filler, a delustering agent, a foaming agent, a flame retardant, a lubricant, an antistatic agent, an antioxidant, an ultraviolet absorber, a light stabilizer, a radical scavenger and a soft component (e.g. rubber) as necessary.

The transparent resin layer 7 can be formed by a known printing method such as gravure printing, flexographic printing, silk screen printing or offset printing.

The thickness of the transparent resin layer 7 is not particularly limited, and it is generally about 0.1 to 10 µm, preferably about 1 to 10 µm.

The transfer film for three-dimensional molding according to the present invention can be produced by, for example, a method including the steps of:
laminating a layer formed of an ionizing radiation curable resin composition containing polycarbonate (meth) acrylate and an acrylic resin on the transferring base material 1; and
forming a surface protective layer on the transferring base material by irradiating the ionizing radiation curable resin composition with an ionizing radiation to cure the layer formed of the ionizing radiation curable resin composition, wherein the acrylic resin is a homopolymer of a (meth)acrylic acid ester, a copolymer of two or more different (meth)acrylic acid ester monomers, or a copolymer of a (meth)acrylic acid ester and another monomer, and wherein a content of the acrylic resin contained in the ionizing radiation curable resin composition is 25 parts by mass or less based on 100 parts by mass of solid components other than the acrylic resin in the ionizing radiation curable resin composition.

After the step of laminating a layer formed of an ionizing radiation curable resin composition, the step of laminating a layer formed of a primer layer forming composition on the layer formed of the ionizing radiation curable resin composition, followed by forming the surface protective layer 3 on the transferring base material by irradiating the ionizing radiation curable resin composition with an ionizing radiation to cure the layer formed of the ionizing radiation curable resin composition may be carried out as described above.

### 2. Resin molded article and method for production thereof

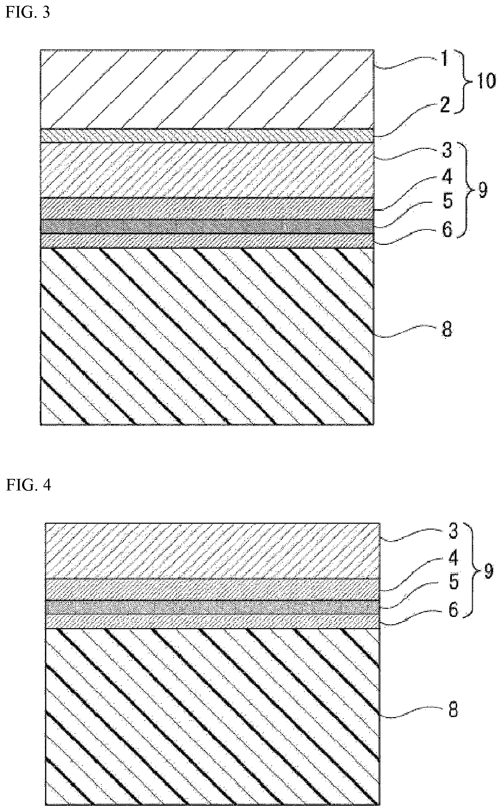

The resin molded article according to the present invention is formed by integrating the transfer film for three-dimensional molding according to the present invention and a molded resin. Specifically, the molded resin layer 8 is laminated on a side opposite to the support 10 in the transfer film for three-dimensional molding to obtain a resin molded article with a support in which at least the molded resin layer 8, the surface protective layer 3 and the support 10 are laminated in this order (see, for example, Fig. 3). Next, the support 10 is separated from the resin molded article with a support to obtain the resin molded article according to the present invention in which at least the molded resin layer 8 and the surface protective layer 3 are laminated in this order (see, for example, Fig. 4). As shown in Fig. 4, the resin molded article according to the present invention may be further provided with at least one of the above-mentioned decorative layer 5, primer layer 4, adhesive layer 6 and transparent resin layer 7 and so on as necessary.

The resin molded article according to the present invention can be produced by a method including the steps of:
laminating a molded resin layer on a side opposite to the transferring base material in the transfer film for three-dimensional molding; and
separating the transferring base material from the surface protective layer.

When the transfer film for three-dimensional molding is applied to, for example, an injection molding simultaneous transfer decoration method, the method for producing the resin molded article according to the present invention is, for example, a method including the steps of (1) to (5):
(1) heating the transfer film for three-dimensional molding from the surface protective layer side by a heating platen while the surface protective layer side (side opposite to the support) of the transferring transfer film for three-dimensional molding is kept facing the inside of a mold;
(2) preliminarily molding (vacuum-molding) the transfer film for three-dimensional molding so as to follow the shape of the inside of a mold, and thus bringing the transfer film for three-dimensional molding into close contact with the inner surface of the mold to close the mold;
(3) injecting a resin into the mold;
(4) cooling the injected resin, and then taking a resin molded article (resin molded article with a support) from the mold; and
(5) separating the support from the surface protective layer of the resin molded article.

In both the steps (1) and (2), the temperature at which the transfer film for three-dimensional molding is heated is preferably equal to or higher than a temperature in the vicinity of the glass transition temperature and lower than the melting temperature (or melting point) of the transferring base material 1. Normally, it is more preferable to heat the transfer film for three-dimensional molding at a temperature in the vicinity of the glass transition temperature of the transferring base material 1. The vicinity of the glass transition temperature refers to a range of the glass transition temperature ± about 5°C, and is generally about 70 to 130°C when a polyester film suitable as the transferring base material 1 is used. When a mold having a shape which is not so complicated is used, the step of heating the transfer film for three-dimensional molding and the step of preliminarily molding the transfer film for three-dimensional molding may be omitted to mold the transfer film for three-dimensional molding in the shape of the mold by means of heat and pressure from the injected resin in the later-described step (3).

In the both step (3), the later-described molding resin is melted, and injected into a cavity to integrate the transfer film for three-dimensional molding and the molding resin with each other. When the molding resin is a thermoplastic resin, the resin is heated and melted to be brought into a flowing state, and when the molding resin is a thermosetting resin, an uncured liquid composition is injected in a flowing state at room temperature or by appropriately heating the composition, and cooled to be solidified. Accordingly, the transfer film for three-dimensional molding is integrally attached to the formed resin molded body to form a resin molded article with a support. The temperature at which the molding resin is heated depends on the type of the molding resin, but is generally about 180 to 320°C.

The thus obtained resin molded article with a support is cooled and then taken out from the mold in the step (4), and thereafter, in the step (5), the support 10 is separated from the surface protective layer 3 to obtain a resin molded article. The step of separating the support 10 from the surface protective layer 3 may be carried out concurrently with the step of taking out the decorative resin molded article from the mold. In other words, the step (5) may be included in the step (4).

Further, production of the resin molded article can be performed by a vacuum press-bonding method. In the vacuum press-bonding method, first the transfer film for three-dimensional molding according to the present invention and the resin molded body are placed in a vacuum press-bonding machine including a first vacuum chamber situated on the upper side and a second vacuum chamber situated on the lower side in such a manner that the transfer film for three-dimensional molding is on the first vacuum chamber side and the resin molded body is on the second vacuum chamber side, and that a side on which the molded resin layer 8 is laminated in the transfer film for three-dimensional molding faces the resin molded body side. The two vacuum chambers are then evacuated. The resin molded body is placed on a lift table that is provided on the second vacuum chamber side and is capable of moving up and down. Then, the first vacuum chamber is pressurized, and the molded body is pressed against the transfer film for three-dimensional molding with the lift table, and by using a pressure difference between the two vacuum chambers, the transfer film for three-dimensional molding is bonded to the surface of the resin molded body while being stretched. Finally, the two vacuum chambers are released to atmospheric pressure, the support 10 is separated, and an unnecessary portion of the transfer film for three-dimensional molding is trimmed off as necessary, so that the resin molded article according to the present invention can be obtained.

Preferably, the vacuum press-bonding method includes the step of heating the transfer film for three-dimensional molding for softening the transfer film for three-dimensional molding to improve the moldability thereof before the step of pressing the molded body against the transfer film for three-dimensional molding. The vacuum press-bonding method including such a step may be referred to particularly as a vacuum heating and press-bonding method. The heating temperature in such a step may be appropriately selected according to the type of the resin that forms the transfer film for three-dimensional molding, or the thickness of the transfer film for three-dimensional molding, but when for example, a polyester resin film or an acrylic resin film is used as the transferring base material layer 1, the heating temperature may be normally about 60 to 200°C.

In the resin molded article of the present invention, a resin appropriate to an intended use may be selected to form the molded resin layer 8. The molding resin for forming the molded resin layer 8 may be a thermoplastic resin or may be a thermosetting resin.

Specific examples of the thermoplastic resin include polyolefin-based resins such as polyethylene and polypropylene, ABS resins, styrene resins, polycarbonate resins, acrylic resins and vinyl chloride-based resins. These thermoplastic resins may be used alone, or may be used in combination of two or more thereof.

Examples of the thermosetting resin include urethane resins and epoxy resins. These thermosetting resins may be used alone, or may be used in combination of two or more thereof.

Since in the resin molded article with a support, the support 10 serves as a protective sheet for the resin molded article, the support 10 may be maintained as it is without being separated after production of the resin molded article with a support, and may be separated at the time of use. When used in this manner, the resin molded article can be prevented from being scratched by, for example, scraping during transportation.

Owing to excellent scratch resistance and chemical resistance, the resin molded article according to the present invention can be used for, for example, interior materials or exterior materials of vehicles such as automobiles; fittings such as window frames and door frames; interior materials of buildings such as walls, floors and ceilings; housings of household electric appliances such as television receivers and air conditioners; and containers etc.

### EXAMPLES

Hereinafter, the present invention will be described in detail by way of examples and comparative examples.

### (Examples 1 to 6 and Comparative Examples 1 to 3)

### [Production of transfer film for three-dimensional molding]

A polyethylene terephthalate film (thickness: 50 µm) with an easily adhesive layer formed on one surface thereof was used as a transferring base material. A coating solution mainly composed of a melamine-based resin was applied to a surface of the easily adhesive layer of the polyethylene terephthalate film by gravure printing to form a release layer (thickness: 1 µm). An ionizing radiation curable resin composition containing components as shown in Table 1 was then applied onto the release layer by a bar coater in such a manner that the thickness after curing would be 3 µm, so that a surface protective layer forming coating film was formed.

Details of ionizing radiation curable resins A and B and acrylic resins A and B contained in the ionizing radiation curable resin composition are as described below. Among the solid components in the ionizing radiation curable resin composition, components other than the acrylic resin and the curing agent form the ionizing radiation curable resins A and B.

Next, the coating film was irradiated with an electron beam having an accelerating voltage of 165 kV and an amount of irradiation of 50 kGy (5 Mrad), so that the surface protective layer forming coating film was cured to form a surface protective layer. A primer layer forming resin composition containing a resin as described in Table 1 was applied onto the surface protective layer by gravure printing to form a primer layer (thickness: 1.5 µm). Further, a decorative layer (thickness: 5 µm) with a hairline pattern was formed on the primer layer by gravure printing using a decorative layer forming black ink composition containing an acrylic resin and a vinyl chloride-vinyl acetate-based copolymer resin as a binder resin (50% by mass of acrylic resin and 50% by mass of vinyl chloride-vinyl acetate-based copolymer resin). Further, using an adhesive layer forming resin composition containing an acryl-based resin (softening temperature: 125°C), an adhesive layer (thickness: 4 µm) was formed on the decorative layer by gravure printing to produce a transfer film for three-dimensional molding with a transferring base material, a release layer, a surface protective layer, a primer layer, a decorative layer and an adhesive layer laminated in this order.

### <Ionizing radiation curable resin>

A: difunctional polycarbonate acrylate (weight average molecular weight: 10,000)
B: pentaerythritol triacrylate

### <Acrylic resin>

A: acrylic polymer (acrylic resin, copolymer of methyl methacrylate and methacrylic acid, Tg: 105°C, weight average molecular weight: about 20,000)
B: acrylic polymer (acrylic resin, copolymer of methyl methacrylate and methacrylic acid, Tg: 105°C, weight average molecular weight: about 12,000)

### [Production of resin molded article]

Each transfer film for three-dimensional molding, which was obtained as described above, was placed in a mold, heated at 350°C for 7 seconds with an infrared heater, and preliminarily molded so as to follow the shape of the inside of the mold, so that the mold was closed (maximum draw ratio: 50%). Thereafter, the injected resin was injected into the cavity of the mold to integrally mold the transfer film for three-dimensional molding and the injected resin, the molded product was taken out from the mold, and simultaneously the support (transferring base material and release layer) was separated and removed to obtain a resin molded article.

### Evaluation of initial adhesion

The surface of the transfer film for three-dimensional molding was notched so as to draw 11 lines in a longitudinal direction and 11 lines in a lateral direction at intervals of 1 mm over a length of 5 cm using a cutter, so that a notch was formed in the shape of a checkerboard having 100 squares in total with 10 squares in a longitudinal direction and 10 squares in a lateral direction. Cellotape (No. 405-1P) manufactured by Nichiban Co., Ltd. was press-bonded onto the notch, and then rapidly peeled off to evaluate adhesion. The evaluation criteria are as follows. The results are shown in Table 1.
○: Not delaminated.
×: Delaminated.

### Scratch resistance (steel wool)

The surface of the transfer film for three-dimensional molding was scraped back and forth ten times under a load of 1.5 kgf using a steel wool (#0000), and the surface was visually observed, and scratch resistance to the steel wool was evaluated in accordance with the following criteria. The results are shown in Table 1.
⊙: Almost no change in appearance and excellent in scratch resistance
O: Slightly poor in glossiness, but excellent in scratch resistance
Δ: Poor in glossiness, and somewhat poor in scratch resistance
×: Marked change in appearance, and somewhat poor in scratch resistance

### Measurement of tensile elongation

In an oven set at 100°C, the transfer film for three-dimensional molding was heated for 60 seconds, and drawn at 100 mm/min using a Tensilon universal tester, and the tensile elongation (%) in occurrence of a fissure was measured. The results are shown in Table 1. The tensile elongation of 100% means that the transfer film for three-dimensional molding is extended twice as long.

### Chemical resistance (sunscreen cream)

0.5 g of a commercially available sunscreen cosmetic was uniformly applied to a 50 mm (length) × 50 mm (width) part of the surface of the resin molded article obtained as described above. This resin molded article was left standing in an oven at 80°C for 24 hours. The resin molded article was taken out, the surface thereof was washed, the state of the part coated with the sunscreen cosmetic (test surface) was then visually observed, and chemical resistance with respect to the sunscreen cosmetic was evaluated in accordance with the following criteria. The sunscreen cosmetic is a commercially available SPF 50 product, and contains 3% of 1-(4-methoxyphenyl)-3-(4-tert-butylphenyl)-1,3-propanedione, 10% of 3,3,5-trimethylcyclohexyl salicylate, 5% of 2-ethylhexyl salicylate and 10% of 2-ethylhexyl 2-cyano-3,3-diphenylacrylate as components.
⊙: Almost no change in appearance and particularly excellent in chemical resistance
O: Slightly poor in glossiness, but excellent in chemical resistance
Δ: Poor in glossiness, and somewhat poor in chemical resistance
×: Marked change in appearance, and somewhat poor in chemical resistance

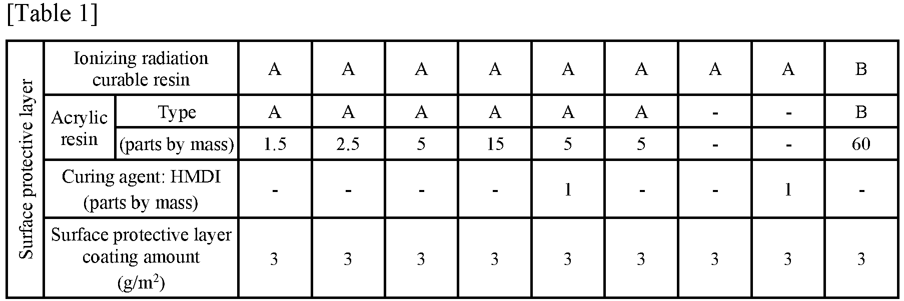

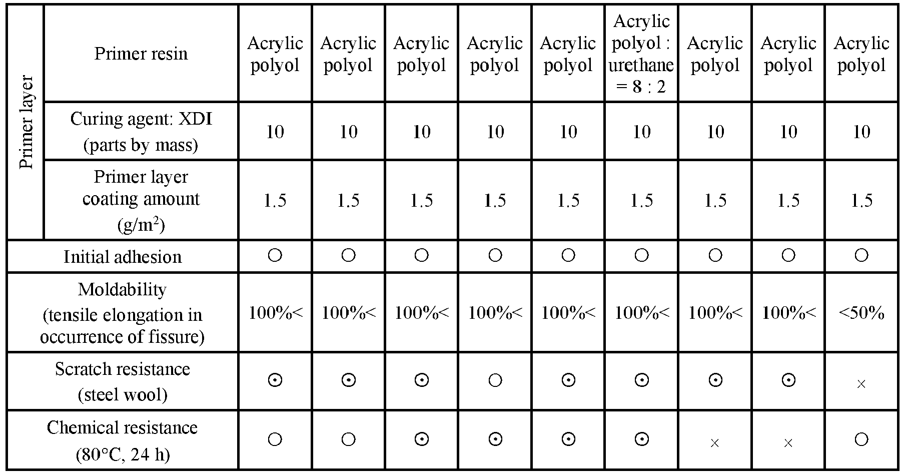

In Table 1, HMDI denotes 1,6-hexamethylene diisocyanate used as a curing agent, and XDI denotes xylene diisocyanate. In addition, in Table 1, the term acrylic polyol : urethane = 8 : 2 means a resin obtained by mixing acrylic polyol and urethane resin at a mass ratio of 8 : 2.

In Table 1, the amount of the acrylic resin the surface protective layer is the added amount thereof based on 100 parts by mass of solid components other than the acrylic resin contained in the ionizing radiation curable resin composition that forms the surface protective layer. Similarly, the amount of the curing agent in the surface protective layer is the added amount thereof based on 100 parts by mass of solid components other than the curing agent contained in the ionizing radiation curable resin composition that forms the surface protective layer.

As shown in Table 1, the transfer films for three-dimensional molding in Examples 1 to 6 in which the surface protective layer was formed of a cured product of an ionizing radiation curable resin composition containing a polycarbonate (meth) acrylate and an acrylic resin was excellent in moldability, scratch resistance and chemical resistance.

On the other hand, the transfer films for three-dimensional molding in Comparative Examples 1 and 2 in which for the surface protective layer, a polycarbonate (meth)acrylate was used, but an acrylic resin was not used was poorer in chemical resistance as compared to Examples 1 to 6. In addition, the transfer film for three-dimensional molding in Comparative Example 3 in which a polycarbonate (meth)acrylate was not used for the surface protective layer was poor in moldability and scratch resistance.

### DESCRIPTION OF REFERENCE SIGNS

1: Transferring base material
2: Release layer
3: Surface protective layer
4: Primer layer
5: Decorative layer
6: Adhesive layer
7: Transparent resin layer
8: Molded resin layer
9: Transfer layer
10: Support

## Claims

1. A transfer film for three-dimensional molding which comprises at least a surface protective layer (3) on a transferring base material (1), the surface protective layer (3) being formed of a cured product of an ionizing radiation curable resin composition containing a polycarbonate (meth) acrylate and an acrylic resin, **characterized in that**:
the acrylic resin is a homopolymer of a (meth)acrylic acid ester, a copolymer of two or more different (meth)acrylic acid ester monomers, or a copolymer of a (meth)acrylic acid ester and another monomer, and
a content of the acrylic resin contained in the ionizing radiation curable resin composition is 25 parts by mass or less based on 100 parts by mass of solid components other than the acrylic resin in the ionizing radiation curable resin composition.

2. The transfer film for three-dimensional molding according to claim 1, which comprises at least a surface protective layer (3) and a primer layer (4) in this order on the transferring base material (1).

3. The transfer film for three-dimensional molding according to claim 2, wherein the primer layer (4) contains a polyol resin and/or cured product thereof.

4. The transfer film for three-dimensional molding according to claim 3, wherein the polyol resin contains an acryl polyol.

5. The transfer film for three-dimensional molding according to any one of claims 1 to 4, wherein
the ionizing radiation curable resin composition further contains a curing agent, and
a content of the curing agent contained in the ionizing radiation curable resin composition is 0.1 parts by mass or more and 20 parts by mass or less based on 100 parts by mass of solid components other than the curing agent in the ionizing radiation curable resin composition.

6. The transfer film for three-dimensional molding according to any one of claims 1 to 5, which comprises at least one selected from the group consisting of a decorative layer (5), an adhesive layer (6) and a transparent resin layer (7) on the surface protective layer (3) on a side opposite to the transferring base material (1).

7. A method for producing a transfer film for three-dimensional molding, the method comprising the steps of:
laminating a layer formed of an ionizing radiation curable resin composition containing a polycarbonate (meth)acrylate and an acrylic resin; and
forming a surface protective layer (3) on a transferring base material by irradiating the ionizing radiation curable resin composition with an ionizing radiation to cure the layer formed of the ionizing radiation curable resin composition, **characterized in that**:
the acrylic resin is a homopolymer of a (meth)acrylic acid ester, a copolymer of two or more different (meth)acrylic acid ester monomers, or a copolymer of a (meth)acrylic acid ester and another monomer, and
a content of the acrylic resin contained in the ionizing radiation curable resin composition is 25 parts by mass or less based on 100 parts by mass of solid components other than the acrylic resin in the ionizing radiation curable resin composition.

8. A method for producing a resin molded article, the method comprising the steps of:
laminating a molded resin layer (8) on a side opposite to the transferring base material (1) in the transfer film for three-dimensional molding according to any one of claims 1 to 6; and
separating the transferring base material (1) from the surface protective layer (3).

## Patentansprüche

1. Transferfolie zum dreidimensionalen Formen, die mindestens eine Oberflächenschutzschicht (3) auf einem übertragenden Basismaterial (1) umfasst, wobei die Oberflächenschutzschicht (3) aus einem gehärteten Produkt einer durch ionisierende Strahlung härtbaren Harzzusammensetzung, die ein Polycarbonat- (Meth)Acrylat und ein Acrylharz enthält, gebildet ist, **dadurch gekennzeichnet, dass**:
das Acrylharz ein Homopolymer eines (Meth)Acrylsäureesters, ein Copolymer von zwei oder mehreren verschiedenen (Meth)Acrylsäureester-Monomeren oder ein Copolymer eines (Meth)Acrylsäureesters und eines anderen Monomers ist, und
ein Anteil des Acrylharzes, das in der durch ionisierende Strahlung härtbaren Harzzusammensetzung enthalten ist, 25 Masseteile oder weniger, basierend auf 100 Masseteilen anderer Feststoffkomponenten als dem Acrylharz, in der durch ionisierende Strahlung härtbaren Harzzusammensetzung beträgt.

2. Transferfolie zum dreidimensionalen Formen nach Anspruch 1, die mindestens eine Oberflächenschutzschicht (3) und eine Primerschicht (4) in dieser Reihenfolge auf dem übertragenden Basismaterial (1) umfasst.

3. Transferfolie zum dreidimensionalen Formen nach Anspruch 2, wobei die Primerschicht (4) ein Polyolharz und/oder ein gehärtetes Produkt desselben enthält.

4. Transferfolie zum dreidimensionalen Formen nach Anspruch 3, wobei das Polyolharz ein Acrylpolyol enthält.

5. Transferfolie zum dreidimensionalen Formen nach einem der Ansprüche 1 bis 4, wobei
die durch ionisierende Strahlung härtbare Harzzusammensetzung ferner ein Härtungsmittel enthält, und
ein Anteil des Härtungsmittels, das in der durch ionisierende Strahlung härtbaren Harzzusammensetzung enthalten ist, 0,1 Masseteile oder mehr und 20 Masseteile oder weniger, basierend auf 100 Masseteilen anderer Feststoffkomponenten als dem Härtungsmittel, in der durch ionisierende Strahlung härtbaren Harzzusammensetzung enthält.

6. Transferfolie zum dreidimensionalen Formen nach einem der Ansprüche 1 bis 5, die mindestens eine Schicht umfasst, das aus der Gruppe ausgewählt wird, die aus einer Dekorschicht (5), einer Klebeschicht (6) und einer durchsichtigen Harzschicht (7) auf der Oberflächenschutzschicht (3) auf einer Seite gegenüber dem übertragenden Basismaterial (1) besteht.

7. Verfahren zum Herstellen einer Transferfolie zum dreidimensionalen Formen, wobei das Verfahren folgende Schritte umfasst:
Laminieren einer Schicht, die aus einer durch ionisierende Strahlung härtbaren Harzzusammensetzung, die ein Polycarbonat-(Meth)Acrylat und ein Acrylharz enthält, gebildet wird; und
Bilden einer Oberflächenschutzschicht (3) auf einem übertragenden Basismaterial durch Bestrahlen der durch ionisierende Strahlung härtbaren Harzzusammensetzung mit einer ionisierenden Strahlung, um die Schicht, die aus der durch ionisierende Strahlung härtbaren Harzzusammensetzung gebildet wird, zu härten, **dadurch gekennzeichnet, dass**:
das Acrylharz ein Homopolymer eines (Meth)Acrylsäureesters, ein Copolymer von zwei oder mehreren verschiedenen (Meth)Acrylsäureester-Monomeren oder ein Copolymer eines (Meth)Acrylsäureesters und eines anderen Monomers ist, und
ein Anteil des Acrylharzes, das in der durch ionisierende Strahlung härtbaren Harzzusammensetzung enthalten ist, 25 Masseteile oder weniger, basierend auf 100 Masseteilen anderer Feststoffkomponenten als dem Acrylharz, in der durch ionisierende Strahlung härtbaren Harzzusammensetzung beträgt.

8. Verfahren zum Herstellen eines Harzformteils, wobei das Verfahren folgende Schritte umfasst:
Laminieren einer geformten Harzschicht (8) auf einer Seite gegenüber dem übertragenden Basismaterial (1) in der Transferfolie zum dreidimensionalen Formen nach einem der Ansprüche 1 bis 6; und
Trennen des übertragenden Basismaterials (1) von der Oberflächenschutzschicht (3).

## Revendications

1. Film de transfert pour moulage tridimensionnel, qui comprend au moins une couche de protection de surface (3) sur un matériau de base de transfert (1), la couche de protection de surface (3) étant constituée d'un produit réticulé d'une composition de résine réticulable par radiations ionisantes contenant un (méth)acrylate polycarbonate et une résine acrylique, **caractérisé en ce que** :
la résine acrylique étant un homopolymère d'un ester d'acide (méth)acrylique, un copolymère d'au moin deux différents monomères esters d'acide (méth)acrylique, ou un copolymère d'un ester d'acide (méth)acrylique et d'un autre monomère, et
une teneur en la résine acrylique dans la composition de résine réticulable par radiations ionisantes est d'au plus 25 parties en poids rapportées à 100 parties en poids de composants solides autres que la résine acrylique dans la composition de résine réticulable par radiations ionisantes.

2. Film de transfert pour moulage tridimensionnel selon la revendication 1, qui comprend au moins une couche de protection de surface (3) et une couche d'apprêt (4) dans cet ordre sur le matériau de base de transfert (1).

3. Film de transfert pour moulage tridimensionnel selon la revendication 2, dans lequel la couche d'apprêt (4) contient une résine polyol et/ou un produit réticulé de celle-ci.

4. Film de transfert pour moulage tridimensionnel selon la revendication 3, dans lequel la résine polyol contient un polyol acrylique.

5. Film de transfert pour moulage tridimensionnel selon l'une quelconque des revendications 1 à 4, dans lequel
la composition de résine réticulable par radiations ionisantes contient en outre un agent réticulant, et
une teneur en l'agent réticulant contenu dans la composition de résine réticulable par radiations ionisantes est d'au moins 0,1 parties en poids et d'au plus 20 parties en poids rapportées à 100 parties en poids de composants solides autres que l'agent réticulant dans la composition de résine réticulable par radiations ionisantes.

6. Film de transfert pour moulage tridimensionnel selon l'une quelconque des revendications 1 à 5, qui comprend au moins une couche choisie dans le groupe constitué d'une couche décorative (5), une couche adhésive (6) et une couche de résine transparente (7) sur la couche de protection de surface (3) du côté opposé au matériau de base de transfert (1) .

7. Méthode de production d'un film de transfert pour moulage tridimensionnel, la méthode comprenant les étapes consistant à :
laminer une couche formée d'une composition de résine réticulable par radiations ionisantes contenant un (méth)acrylate polycarbonate et une résine acrylique ; et former une couche de protection de surface (3) sur une matériau de base de transfert en irradiant la composition de résine réticulable par radiations ionisantes avec une radiation ionisante pour réticuler la couche formée de la composition de résine réticulable par radiations ionisantes, **caractérisée en ce que** :
la résine acrylique étant un homopolymère d'un ester d'acide (méth)acrylique, un copolymère d'au moin deux différents monomères esters d'acide (méth)acrylique, ou un copolymère d'un ester d'acide (méth)acrylique et d'un autre monomère, et
une teneur en la résine acrylique dans la composition de résine réticulable par radiations ionisantes est d'au plus 25 parties en poids rapportées à 100 parties en poids de composants solides autres que la résine acrylique dans la composition de résine réticulable par radiations ionisantes.

8. Méthode de production d'un article moulé en résine, la méthode comprenant les étapes consistant à comprenant les étapes consistant à :
laminer une couche de résine moulée (8) du côté opposé au matériau de base de transfert (1) dans le film de transfert pour moulage tridimensionnel selon l'une quelconque des revendications 1 à 6 ; et
séparer le matériau de base de transfert (1) de la couche de protection de surface (3).
